# EUROPEAN PATENT SPECIFICATION

(11) **EP 0 367 068 B1**
(45) Date of publication and mention of the grant of the patent: **24.09.1997**
(21) Application number: 89119692.5
(22) Date of filing: 24.10.1989
(51) Int. Cl.: H01G 9/04, C22C 1/04

(54) **Capacitor grade tantalum powder**
Tantalpulver von Kondensatorqualität
Poudre de tantale de qualité condensateur

(30) Priority: 01.11.1988 US 265498
(43) Date of publication of application: 09.05.1990
(73) Proprietor: H.C. Starck Inc., Newton Massachusetts 02164 (US)
(72) Inventor: Tripp, Terrance B., Newton Massachusetts 02164 (US); Hildreth, Richard W., Newton Massachusetts 02164 (US)
(74) Representative: Steiling, Lothar, Dr.

(56) References cited:
- US-A- 3 825 802
- US-A- 4 645 533
- CHEMICAL ABSTRACTS, vol. 94, no. 4, 26th January 1981, page 202, abstract no. 18876r, Columbus, Ohio, US; & JP-A-80 113 807 (SHOWA K.B.I. CO., LTD) 02-09- 1980

## Description

### BACKGROUND OF THE INVENTION

The present invention relates to capacitors and tantalum powders of capacitor grade, used in production and miniature, high-specific-capacitance, low-leakage, solid state electrolytic and wet electrolytic capacitors with anode pellets or slabs made of sintered valve metal powders, e.g., tantalum.

It is known in the art that phosphorous doping retards sinter closure of tantalum powders used in anode production to preserve a high capacitance of the tantalum powder. However, increasing levels of phosphorous doping also produce unacceptable increases in D.C. leakage, particularly in anodes formed (oxidized) at lower temperatures, e.g. 60°C.

Chemical Abstracts, vol. 94, no. 4, 26^{th} January 1981, page 202, abstract no. 18876r, Columbus, Ohio, USA discloses Ta powder useful for electrolytic capacitors, said powder comprising Si (7000 ppm) and P (due to phosphates) and being sintered at 1200°C.

In US-A-3,825,802 it is proposed to provide an electrode for a capacitor with improved voltage breakdown and storage capacity, said electrode comprising Ta powder with N, Si, P, B or a mixture thereof as a dopant.

It is a principal object of the present invention to provide an improved capacitor grade tantalum powder affording practical high capacitance at low leakage and to produce anodes therefrom.

### SUMMARY OF THE INVENTION

The object of the invention is achieved in a multidopant tantalum powder comprising uniquely balanced silicon and phosphorous dopants or equivalents in an otherwise high purity (capacitor grade), high surface area (in excess of 4 000 cm²/gm), tantalum powder.

This invention specifically relates to a capacitor grade tantalum powder being of such size, configuration and composition so that the sintered at 1.400°C or higher and formed anodes can achieve a high specific apacitance (CV/gm) in excess of 15.000 CV/gm,
wherein the tantalum powder contains dopant of silicon and phosphorous in proportions of
- silicon:: 50 - 1000 ppm relative to tantalum, and
- phosphorous:: 10 - 300 ppm relative to tantalum
the powder having such combined concentration of silicon and phosphorous therein that it is electrolytically formable at any formation temperature substantially throughout the range of 40-90°C, consistent with affording said high specific capacitance, and a D.C. leakage (L/CV) of less than 0.5 nanoampere per microfarad-volt.

The phosphorous enhances capacitance and the silicon suppresses leakage normally associated with high phosphorous doping levels after low temperature formation and also enhances capacitance.

The preferred range are 100-500 ppm Si and 20-80 ppm P.

The resultant tantalum can be agglomerated, deoxidized, sintered at or over 1 400°C and anodized at or over 40°C to form a high specific capacitance, low leakage anode of an electrolyte capacitor (wet or solid electrolytic).

This invention thus also particularly relates to the powder of this invention as formed into an agglomerated powder, an anodic pellet formed of that powder and an anode formed of that pellet. In a preferred embodiment of this invention the pellet is formed at a temperature in the range 40°C - 60°C to form an anode, according to one preferred variation being formed in a dilute mineral acid.

This invention also relates to a method of producing high capacitance, low leakage capacitor grade valve metal powder comprising the step of providing phosphorous as a primary capacitance enhancing dopant in an amount from 10 to 30 ppm relative to tantalum and, as an interacting further dopant silicon in an amount from 50 to 1000 ppm relative to tantalum, the silicon and phosphorous being provided in such combined concentration to effect a specific D.C. leakage (L/CV) of such powder of less than 0.5 nano-amperes per microfarad-volt and high specific capacitance (CV/g) in excess of 15 000 in anodized pellets as made therefrom and sintered at 1 400°C or higher, after anodic formation at temperatures selected in the range 40-60°C.

The silicon can be added at various stages of tantalum production but is preferably added during reduction of a tantalum precursor (e.g., the standard method of K₂TaF₇ reduction by Na reducing agent). Phosphorus content is more flexibly established at various stages, but preferable after reduction.

In a preferred embodiment of this invention a stirring reduction reactor can be charged with K₂TaF₇ or Na₂TaF₇ double salt (tantalum precursor), preferably diluted in NaCl or other practical halide salts of sodium or potassium, which is melted and stirred and subject to reduction by molten sodium added to the charge after melting (or pre-mixed therewith). The dilution can vary from 0:1 to 1:1 weight ratio of diluent to precursor. Silicon and dopants are preferably added to the charge prior to or during molten state reduction. The silicon dopant is preferably provided in the form of compounds thereof, such as Si₃N₄.
The phosphorous can be a component of the K₂TaF₇ or Na₂TaF₇ charge or diluent, or added to tantalum after the reduction, as viable alternatives or supplements to addition during reduction. Preferably the phosphorous is added after the reduction stage.

The reduction procesing, per se, can be in accordance with any of the well established industry procedures for effecting the same in batch reactors, or in continuous processing extensions of such procedures. All such procedures involve production of an end product mass containing elemental tantalum and salt by-products. The tantalum may be isolated from the by-products by chemical (acid leaching) methodology and/or other separation techniques to produce primary powder particles. Product crushing, sieving and other physical handling means incidental to such separation and subsequent size sorting of the primary powders are well known per se.

Preferably, the primary powders are agglomerated by pre-sintering to produce sponge-like secondary powders, and deoxized, both procedures being also well known in the art.

A preferred method of producing a high capacitance low leakage anode comprises electrolytic formation at 40-60°C of a sintered pellet of powders of tantalum in a dilute mineral acid, the powder comprising mixed dopants in the ranges:
(a) Silicon - 50 to 1 000 ppm, and
(b) Phosphorus - 10 to 300 ppm,
relative to tantalum.

The import of the data of the following examples, and other aspects of the invention, includes at least the following:
(1) The dilemma of known benefit of high P content (e.g., 50 ppm) on capacitance and known drawback of high P content to leakage is resolved. Increasing Si content allows usage of higher P contents with high capacitance and low leakage.
(2) Silicon doping alone can provide enhanced capacitance of the tantalum powder. Capacitance of the P/Si doped tantalum powders is enhanced compared to P doping per se. P doping or equivalent is referred to herein as "primary" capacitance enhancing dopant, the word "primary" being arbitrary and not a measure of relative volume inclusion or relative benefit.
(3) The limited window of opportunity of the state of the prior art of P dopant alone (high temperature (80°C or higher) anodization enabling high P content/high capacitance-with-acceptable-leakage) is expanded to allow anodization at lower, as well as high, temperatures on the order of 40-90°C, as a workable range.
(4) The silicon itself functions as a powerful sinter retardant and it is stably maintained (nonvolatile) at the preferred industrial conditions of 1 400°C - 1 600°C sinter temperatures. Surface area and intrinsic capacitance are maintained more effectively. This is related to point (2) above. In turn, this enables a reduction of P content, with the P/Si combined dopant system providing a more effective control of tantalum powder properties.

The leakage reducing silicon dopant can be combined effectively with capacitance enhancing dopants other than phosphorus. However, it is believed that optimum results are realized in the silicon/phosphorus combination. The invention can also be applied to other valve metal powders of capacitor grade including niobium, titanium, zirconium and alloys thereof with each other and/or tantalum.

The following non-limiting examples are presented.

It will now be apparent to those skilled in the art that other embodiments, improvements, details, and uses can be made consistent with the foregoing disclosure and within the scope of this invention as defined by the appended claims.

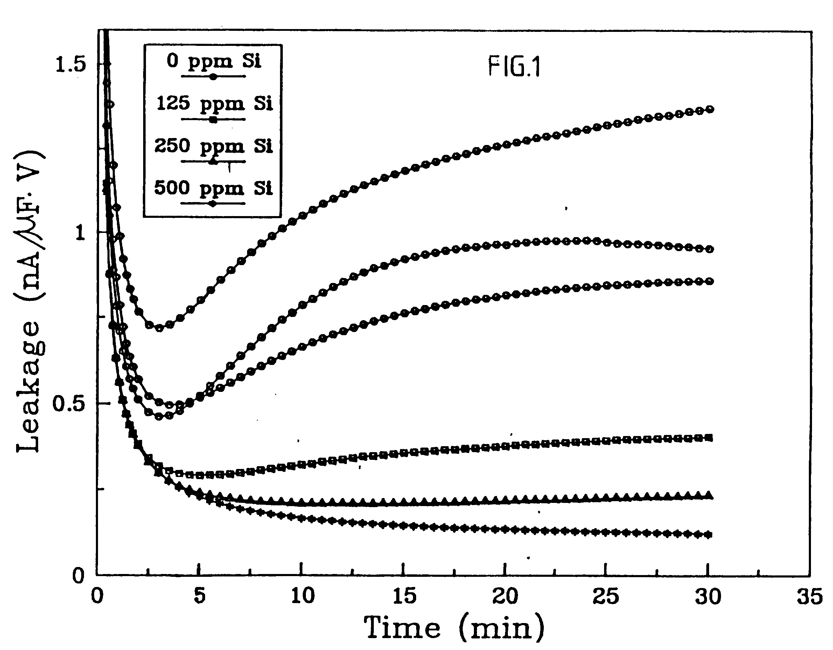

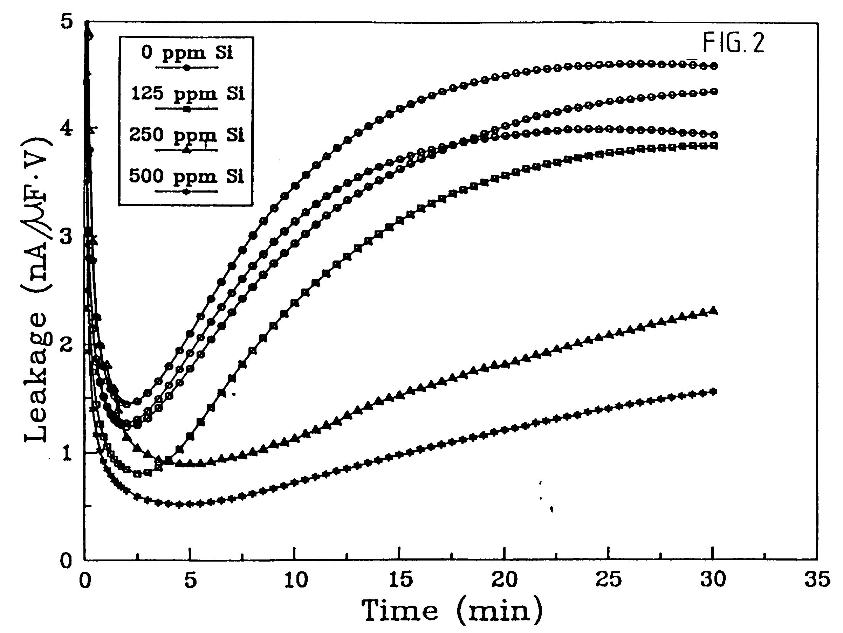

FIGS. 1 and 2 are curves of leakage vs. time results for powders made in accordance with preferred embodiments of the invention and comparative examples.

The tables shown in the following contain data for both powders made in accordance with the invention and comparative examples.

Tantalum primary/secondary powders were produced as described above with these specifics of silicon and phosphorus content:
(1) Several samples had 20 ppm P and others had 40 ppm P, these levels being established in both instances, primarily after reduction and leaching and before agglomeration (to secondary powder form) and deoxidation. The presintering conditions were as set forth in Table I below. Silicon introduction was made by addition of Si₃N₄ to the reduction charge in amounts shown in Table I (either 500 or zero) where 500 ppm is added and the resultant tantalum powder has over 250 ppm of retained silicon after processing losses.
(2) Sintered pellets (1 gram, pressed to green density of 4.5 gm/cc and sintered for thirty minutes at sinter temperatures of Table 1) were produced from the secondary powders and anodized at 60°C in 0.01 (vol.%) phosphoric acid under an electrical schedule of 60 ma/gm to 70V with a four hour hold at 70V.
(3) The anodized pellets were tested for capacitance, leakage and breakdown voltages in wet cells.

These results were obtained:
(a) capacitance: 10 (vol.%) H₃PO₄/22°C bath, 120 cycles, 0.5 test voltage, GenRad 1658 RLC bridge ("Digibridge") instrument;
(b) D.C. leakage: 10 (vol.%) H₃PO₄/22°C bath, 49 V D.C., value at five minutes;
(c) breakdown: 0.1 (vol.%) H₃P₄/60°C bath, 60 ma/gm, average of five pellets' breakdowns.

**Table 1**

| Sinter [°C] | T/Sample | T[°C] of Presinter | P level [ppm] | Si [ppm] | CV/gm | DCL | VBD |
|---|---|---|---|---|---|---|---|
| 1 500 | 1 | 1 375 | 20 | 500 | 22 100 | 0,193 | 134 |
| 1 500 | 2 | 1 375 | 40 | 500 | 23 100 | 0,273 | 133 |
| 1 500 | 3 | 1 375 | 40 | 0 | 25 200 | 0,599 | 130 |
| 1 500 | 4 | 1 300 | 40 | 500 | 23 900 | 0,318 | 132 |
| 1 500 | 5 | 1 375 | 40 | 500 | 24 700 | 0,376 | 136 |
| 1 500 | 6 | 1 375 | 20 | 0 | 22 900 | 0,442 | 134 |
| 1 500 | 7 | 1 300 | 20 | 0 | 26 800 | 0,722 | 123 |
| 1 500 | 8 | 1 300 | 40 | 0 | 26 800 | 0,732 | 135 |
| 1 500 | 9 | 1 300 | 40 | 0 | 25 700 | 0,667 | 134 |
| 1 500 | 10 | 1 300 | 20 | 500 | 27 800 | 0,640 | 125 |
| 1 500 | 11 | 1 300 | 20 | 500 | 26 400 | 0,796 | 124 |
| 1 500 | 12 | 1 375 | 20 | 0 | 24 200 | 0,416 | 137 |
| 1 600 | 13 | 1 375 | 20 | 500 | 13 300 | 0,169 | 181 |
| 1 600 | 14 | 1 375 | 40 | 500 | 13 800 | 0,211 | 185 |
| 1 600 | 15 | 1 375 | 40 | 0 | 14 900 | 1,69 | 172 |
| 1 600 | 16 | 1 300 | 40 | 500 | 13 700 | 0,231 | 191 |
| 1 600 | 17 | 1 375 | 20 | 500 | 14 700 | 0,262 | 183 |
| 1 600 | 18 | 1 375 | 20 | 0 | 12 700 | 0,147 | 178 |
| 1 600 | 19 | 1 300 | 20 | 0 | 15 100 | 0,211 | 176 |
| 1 600 | 20 | 1 300 | 40 | 0 | 15 100 | 2,17 | 181 |
| 1 600 | 21 | 1 300 | 40 | 0 | 13 900 | 2,60 | 188 |
| 1 600 | 22 | 1 300 | 20 | 500 | 16 000 | 0,191 | 160 |
| 1 600 | 23 | 1 300 | 20 | 500 | 15 200 | 0,144 | 168 |
| 1 600 | 24 | 1 375 | 20 | 0 | 14 400 | 0,125 | 185 |

The capacitors and leakage unit are microfarad volts per gram and nanoamperes per microfarad volt. Each expression of capacitors and leakage is an average of results for four pellets.

### EXAMPLE 2

Similar experimental processing, compared to Example 1, above, with varied parameters were conducted to evaluate leakage effects further for tantalum powders with and without (500 ppm) silicon in tantalum powders sintered at 1 600°C:

**Table II**

| Leakage | | | | |
|---|---|---|---|---|
| | 500* ppm Si/Sample | | 0 Si**/Sample | |
| 20 ppm P | 0,144 | 25 | 0,125 | 31 |
| | 0,191 | 26 | 0,261 | 32 |
| | 0,169 | 27 | 0,147 | 33 |
| 40 ppm P | 0,262 | 28 | 2,60 | 34 |
| | 0,231 | 29 | 2,17 | 35 |
| | 0,211 | 30 | 1,69 | 36 |

| | | | | |
|---|---|---|---|---|
| ** except for indicidental impurities, usually 10-30 ppm; i.e., no silicon | | | | |
| * 500 added, at least half of which is retained in the secondary (agglomerated and deoxidized) powder. | | | | |

### EXAMPLE 3

The Example 2 work on 40 ppm F samples was extended with modifications of silicon addition schedule with the results shown in Table III.

**Table III**

| Sinter | T/Sample | Si | DCL |
|---|---|---|---|
| [%] | | [ppm] | |
| 1 500 | 37 | 500 | 0,187 |
| 1 600 | 38 | 500 | 0,226 |
| 1 500 | 39 | 500 | 0,414 |
| 1 600 | 40 | 500 | 0,469 |
| 1 500 | 41 | 500 [*] | 0,337 |
| 1 000 | 42 | 500 [*] | 0,590 |
| 1 500 | 43 | 500 | 0,266 |
| 1 600 | 44 | 500 | 0,321 |
| 1 500 | 45 | 500 [*] | 0,266 |
| 1 600 | 46 | 500 [*] | 0,501 |
| 1 500 | 47 | 250 | 0,359 |
| 1 000 | 48 | 250 | 0,716 |
| 1 500 | 49 | 250 | 0,313 |
| 1 600 | 50 | 250 | 0,689 |
| 1 500 | 51 | 125 | 0,283 |
| 1 600 | 52 | 125 | 0,476 |
| 1 500 | 53 | 125 | 2,91 |
| 1 600 | 54 | 125 | 8,71 |
| 1 500 | 55 | 0 | 4,89 |
| 1 600 | 56 | 0 | 20,92 |

### EXAMPLE 4

The work of the foregoing examles was extended at 60 ppm P and Si additions of 0, 125, 250 and 500 ppm to produce the leakage data shown in FIGS. 1 and 2.

### EXAMPLE 5

The capacitance-related effects were established for two series of reduction produced tantalum powders in various concentrations of Si and P, formed in a first series (A) at 60°C and in a second series (B) at 80°C, capacitance being expressed in specific capacitance units of microfarad-volts per gram.

| A. 60°C Formations | | | | | |
|---|---|---|---|---|---|
| Sample | Si Conc. | | Capacitance | | |
| | [ppm] | 0 ppm P | 20 ppm P | | |
| | | 1 500 | 1 600 | 1 500 | 1 600 |
| 57 | 500 | 24 800 | 12 500 | 26 500 | 1 600 |
| 58 | 500 | 22 100 | 11 800 | 25 600 | 15 800 |
| 59 | 500 | 21 700 | 11 500 | 25 800 | 15 500 |
| 60 | 500 | 23 500 | 11 800 | 25 200 | 14 500 |
| 61 | 500 | 22 700 | 11 600 | 25 600 | 14 200 |
| 62 | 250 | 21 600 | 11 000 | 26 000 | 14 900 |
| 63 | 125 | 20 500 | 11 300 | 24 600 | 14 400 |
| 64 | 0 | 15 900 | 9 720 | 22 200 | 12 900 |

| B. 80°C Formations | | | | | |
|---|---|---|---|---|---|
| Sample | Si Conc. | | Capacitance | | |
| | [ppm] | 0 ppm P | 40 ppm P | | |
| 65 | 500 | 19 800 | 10 400 | 21 700 | 13 400 |
| 66 | 500 | 19 300 | 10 500 | 21 400 | 14 000 |
| 67 | 500 | 18 400 | 10 100 | 20 700 | 13 600 |
| 68 | 500 | 10 700 | 9 450 | 21 700 | 13 800 |
| 69 | 500 | 17 800 | 10 100 | 20 400 | 13 300 |
| 70 | 250 | 18 300 | 9 720 | 22 900 | 14 300 |
| 71 | 125 | 17 500 | 9 780 | 22 100 | 13 800 |

## Claims

1. Capacitor grade tantalum powder which is to be sintered into a porous anode and electrolytically formed, the powder being of such size, configuration and composition so that the sintered at 1.400° C or higher and formed anodes can achieve a high specific capacitance (CV/gm) in excess of 15.000 CV/gm,
wherein the tantalum powder contains dopant of silicon and phosphorous in proportions of
silicon: 50 - 1.000 ppm relative to tantalum, and
phosphorous: 10 - 300 ppm relative to tantalum
the powder having such a combined concentration of silicon and phosphorous therein that the powder is electrolytically formable at any formation temperature substantially throughout the range of 40° C - 90° C, consistent with affording said high specific capacitance, and a D.C. leakage (UCV) of less than 0.5 nanoampere per microfarad-volt.

2. Tantalum powder in accordance with claim 1 wherein the silicon content is 100 - 500 ppm and the phosphorous content is 20 - 80 ppm relative to tantalum.

3. The powder of claim 1 as formed into an agglomerated powder.

4. An anodic pellet formed of the powder of claim 3.

5. The pellet of claim 4 as formed at a temperature in the range 40° C - 60° C to form an anode.

6. The anode of claim 5 as formed in a dilute mineral acid.

7. Method of producing high capacitance, low leakage capacitor grade tantalum powder comprising the step of providing phosphorous as a primary capacitance enhancing dopant in an amount from 10 to 30 ppm relative to tantalum and, as an interacting further dopant silicon in an amount from 50 to 1.000 ppm relative to tantalum, the silicon and phosphorous being provided in such combined concentration to effect a specific D.C. leakage (L/CV) of such powder of less than 0.5 nano-amperes per microfarad-volt and high specific capacitance (CV/g) in excess of 15.000 in anodized pellets as made therefrom and sintered at 1.400° C or higher, after anodic formation at temperatures selected in the range 40° C - 60° C.

8. Method in accordance with claim 7 wherein the valve metal powder is produced from a salt source by reduction of a melt of such salt and the silicon is provided at the reduction stage.

9. Method in accordance with claim 8 wherein the primary capacitance enhancing agent is added to the powder at a stage after reduction.

10. Method of producting a high capacitance low leakage anode comprising electrolytic formation at 40° C - 60° C of a sintered pellet of powders of tantalum in a dilute mineral acid, the powder comprising mixed dopants in the ranges:
(a) Silicon - 50 to 1.000 ppm, and
(b) Phosphorous - 10 to 300 ppm,
relative to tantalum.

## Patentansprüche

1. Tantalpulver mit Kondensatorqualität, das zu einer porösen Anode gesintert und elektrolytisch geformt werden soll, wobei das Pulver eine solche Größe, Struktur und Zusammensetzung hat, daß die bei 1400°C oder darüber gesinterten und geformten Anoden eine hohe spezifische Kapazität (CV/g) von über 15,000 CV/g erreichen können,
wobei das Tantalpulver ein Dotierungsmittel aus Silicium und Phosphor in Anteilen von
Silicium: 50 - 1000 ppm, bezogen auf Tantal, und
Phosphor: 10 - 300 ppm, bezogen auf Tantal,
enthält, wobei das Pulver eine solche kombinierte Konzentration an Silicium und Phosphor enthält, daß das Pulver bei jeder Formungstemperatur im wesentlichen im ganzen Bereich von 40°C bis 90°C elektrolytisch formbar ist, was mit dem Erreichen der hohen spezifischen Kapazität und einem Kriechgleichstrom (L/CV) von weniger als 0,5 Nanoampère pro Mikrofaradvolt im Einklang steht.

2. Tantalpulver gemäß Anspruch 1, wobei der Siliciumgehalt 100 bis 500 ppm beträgt und der Phosphorgehalt 20 bis 80 ppm beträgt, bezogen auf Tantal.

3. Pulver gemäß Anspruch 1, das zu einem agglomerierten Pulver geformt ist.

4. Anodenpreßling, der aus dem Pulver gemäß Anspruch 3 gebildet ist.

5. Preßling gemäß Anspruch 4, der bei einer Temperatur im Bereich von 40°C bis 60°C unter Bildung einer Anode gebildet ist.

6. Anode gemäß Anspruch 5, die in einer verdünnten Mineralsäure gebildet ist.

7. Verfahren zur Herstellung von Tantalpulver mit Kondensatorqualität, hoher Kapazität und geringem Kriechstrom, umfassend den Schritt des Bereitstellens von Phosphor als primäres kapazitätserhöhendes Dotierungsmittel in einer Menge von 10 bis 30 ppm, bezogen auf Tantal, und von Silicium als wechselwirkendes weiteres Dotierungsmittel in einer Menge von 50 bis 1000 ppm, bezogen auf Tantal, wobei das Silicium und der Phosphor in einer solchen kombinierten Konzentration bereitgestellt werden, daß man in daraus hergestellten und bei 1400°C oder darüber gesinterten anodisierten Preßlingen nach der Bildung der Anode bei Temperaturen, die aus dem Bereich von 40°C bis 60°C gewählt sind, einen spezifischen Kriechgleichstrom (L/CV) des Pulvers von weniger als 0,5 Nanoampère pro Mikrofaradvolt und eine hohe spezifische Kapazität (CV/g) von über 15,000 erhält.

8. Verfahren gemäß Anspruch 7, wobei das Tantalpulver aus einer Salzquelle durch Reduktion einer Schmelze des Salzes hergestellt wird und das Silicium im Reduktionsstadium bereitgestellt wird.

9. Verfahren gemäß Anspruch 8, wobei das primäre kapazitätserhöhende Mittel in einem Stadium nach der Reduktion zu dem Pulver gegeben wird.

10. Verfahren zur Herstellung einer Anode mit hoher Kapazität und geringem Kriechstrom, umfassend die elektrolytische Bildung eines gesinterten Preßlings aus Tantalpulvern bei 40°C bis 60°C in einer verdünnten Mineralsäure, wobei das Pulver gemischte Dotierungsmittel in den Bereichen
(a) Silicium: 50 - 1000 ppm, und
(b) Phosphor: 10 - 300 ppm,
bezogen auf Tantal, umfaßt.

## Revendications

1. Poudre de tantale de qualité condensateur qui doit être frittée en une anode poreuse et électrolytiquement formée, la poudre étant de dimension, configuration et composition telles que les anodes frittées à 1400°C ou plus et formées peuvent atteindre une capacité spécifique élevée (CV/g) dépassant 15000 CV/g,
où la poudre de tantale contient un dopant de silicium et de phosphore dans les proportions de
silicium: 50-1000 ppm par rapport au tantable, et
phosphore: 10-300 ppm par rapport au tantale
la poudre ayant une telle concentration combinée de silicium et de phosphore en son sein qu'elle est susceptible d'être électrolytiquement formée à toute température de formation substantiellement dans l'intervalle de 40-90°C, capable de fournir ladite capacité spécifique élevée et une déperdition de DC (L/CV) de moins de 0,5 nanoampère par microfarad-volt.

2. Poudre de tantale selon la revendication 1, dans laquelle la teneur en silicium est de 100-500 ppm et la teneur en phosphore est de 20-80 ppm par rapport au tantale.

3. Poudre selon la revendication 1, formée en une poudre agglomérée.

4. Granule anodique formé de la poudre selon la revendication 3.

5. Granule selon la revendication 4 formé à une température dans l'intervalle de 40-60°C pour former une anode.

6. Anode selon la revendication 5, formée dans un acide minéral dilué.

7. Procédé de production d'une poudre de qualité condensateur de capacité élevée, de faible déperdition, comprenant l'étape de fourniture du phosphore comme dopant primaire augmentant la capacité dans une quantité de 10 à 30 ppm par rapport au tantale, et ensuite comme dopant secondaire du silicium dans une quantité de 50 à 1000 ppm par rapport au tantale, le silicium et le phosphore étant fournis dans une concentration combinée telle qu'on peut obtenir une déperdition spécifique de DC (L/CV) d'une telle poudre de moins de 0,5 nanoampère par microfarad-volt et une capacité spécifique élevée (CV/g) dépassant 15000 dans des granules anodisés ainsi formés et frittés à 1400°C ou plus, après formation anodique à des températures choisies dans l'intervalle de 40-60°C.

8. Procédé selon la revendication 7, dans lequel la poudre métallique est produite à partir d'une source saline par réduction de ce sel fondu et le silicium est fourni à l'étape de réduction.

9. Procédé selon la revendication 8, dans lequel l'agent dopant primaire augmentant la capacité est ajouté à la poudre à une étape après la réduction.

10. Procédé de production d'une anode à capacité élevée, de faible déperdition comprenant la formation électrolytique à 40-60°C d'un granule fritté de poudres de tantale dans un acide minéral dilué, la poudre comprenant des dopants mélangés dans les intervalles de :
(a) silicium : 50 à 1000 ppm, et
(b) phosphore : 10 à 300 ppm,
par rapport au tantale.
